# EUROPEAN PATENT SPECIFICATION

(11) **EP 3 475 220 B1**
(45) Date of publication and mention of the grant of the patent: **20.09.2023**
(21) Application number: 17740478.7
(22) Date of filing: 23.06.2017
(51) Int. Cl.: C01B 25/01, C05B 13/02, C22B 17/02

(54) **APPARATUS FOR REMOVING CADMIUM FROM A CALCINED MATERIAL**
VORRICHTUNG ZUM ENTFERNEN VON CADMIUM AUS EINEM KALZINIERTEN MATERIAL
DISPOSITIF D'EXTRACTION DE CADMIUM D'UN MATÉRIAU CALCINÉ

(30) Priority: 27.06.2016 US 201662355014 P
(43) Date of publication of application: 01.05.2019
(73) Proprietor: FLSmidth A/S, 2500 Valby (DK)
(72) Inventor: PROKESCH, Michael Edward, Coopersburg, PA 18036 (US)
(86) International application number: PCT/IB2017/053763
(87) International publication number: WO 2018/002793

(56) References cited:
- AU-A1- 2014 208 288
- FR-A1- 2 625 223
- US-A- 4 017 585
- US-A- 4 592 900

## Description

### FIELD OF THE INVENTION

The present innovation relates to processing of phosphate containing material (e.g. ore, rock, etc.), the removal of cadmium from such material as it is processed to extract the phosphate from that material, calcination related processing of material, removal of cadmium from calcined material, and methods of making and using the same. More particularly, the present invention relates to an apparatus for removing cadmium from a calcined material comprises a cadmium removal vessel configured to receive calcined material from a calciner to remove cadmium from the received calcined material.

### BACKGROUND OF THE INVENTION

Phosphate containing material can be processed for the making of fertilizer and other products. The processing of an ore, rock, or other material that may contain phosphate can utilize a calcination process. Examples of calcination systems that can be used to process phosphate rock or ore can be appreciated from U.S. Patent Nos. 4,017,585, 4,555,388, 4,592,900, 4,605,370, and 5,132,102 and French Patent No. FR 2625223. Such systems can be used in processing of ore to extract the phosphate for use in another process or for selling the extracted phosphate. Such systems can also be used for the processing of phosphate containing material to make fertilizer or the processing of such material to make another type of end product.

The removal of cadmium from phosphate containing material during processing utilized to extract the phosphate from the phosphate containing material (e.g. ore, rock, etc.) can add substantial expense to the processing. This expense is often needed due to safety concerns associated with material that is also within the phosphate containing material, such as one or more types of heavy metals. For instance, some source material that contains phosphate has a relatively high cadmium content. The removal of cadmium may be needed to ensure consumer safety, worker safety, and/or to ensure that an end product made from the process is sufficiently safe to possible consumers or others as cadmium is a heavy metal that can cause injury to animals and humans. For instance, cadmium is known to accumulate in the kidneys of humans and can cause kidney damage and/or failure if a human ingests too much cadmium or otherwise absorbs too much cadmium.

### SUMMARY OF THE INVENTION

An apparatus for removing cadmium from a calcined material as set out in the appended set of claims.. In some embodiments, the calcined material may be an ore or other material containing phosphate. In other embodiments, the calcined material may be material that contains another type of mineral such as zinc, limestone, gold, silver, or other material.

The apparatus for removal of cadmium from a calcined material includes a cadmium removal vessel configured to receive calcined material from a calciner to remove cadmium from the received calcined material. The cadmium removal vessel being configured to be controlled so that reducing of the cadmium from the calcined material occurs in a reducing environment that has substantially no oxygen gas (e.g. there is no excess oxygen gas and there is excess fuel therein for heating the calcined material such that there is no oxygen gas or there is substantially no oxygen gas).

In some embodiments, the cadmium removal vessel can be configured such that there is no oxygen gas within the environment of the cadmium removal vessel during removal of the cadmium from the calcined material via an entirety of oxygen gas being used to combust fuel fed to the cadmium removal vessel to heat the calcined material to remove the cadmium from the calcined material in the reducing environment. In other embodiments, there may be substantially no oxygen gas within the environment of the cadmium removal vessel during removal of the cadmium from the calcined material by there being trace amounts of oxygen gas (e.g. less than 0.1% by volume oxygen gas, less than 0.5% by volume oxygen gas, etc.).

The cadmium removal vessel can also be configured to control carbon monoxide therein during removal of cadmium from the calcined material such that there is between 0.1% and 5.0% by volume carbon monoxide within gas retained in the cadmium removal vessel during removal of cadmium from the calcined material. For instance, some embodiments of the cadmium removal vessel can be configured to control the reducing environment so that there is greater than 0.1% carbon monoxide by volume therein, so that there is less than 5.0% carbon monoxide by volume therein, so that there is no more than 5.0% carbon monoxide by volume therein, so that there is between 1.0% and 3.7% carbon monoxide by volume therein, or so that there is greater than 0% by volume carbon monoxide therein and less than or equal to 5.0% by volume carbon monoxide therein.

The apparatus for removal of cadmium from a calcined material further includes a heat exchanger configured to receive cadmium containing gas output from the cadmium removal vessel to transfer heat from the cadmium containing gas to cool the cadmium containing gas such that cadmium within the cadmium containing gas condenses. The heat exchanger is configured such that the cadmium condensed therein is absorbed and/or adsorbed with particulates entrained within the cadmium containing gas to form solid particulates comprised of the condensed cadmium. In some embodiments, at least one conduit may extend between the cadmium removal vessel and the heat exchanger to feed to the cadmium containing gas from the cadmium removal vessel to the heat exchanger. The one more conduits may also feed the cadmium containing gas to other processing elements prior to the cadmium containing gas being fed to the heat exchanger (e.g. a carbon monoxide oxidation device, a carbon monoxide removal device, at least one separator, etc.). In some embodiments, a seed source may be configured to feed solid particulates to the heat exchanger to help facilitate the formation of such solid particulates to within a pre-selected size range to facilitate subsequent filtration of the solid cadmium containing particulates from the fluid flow in which those particulates are entrained (e.g. the gas no longer having the condensed cadmium).

The apparatus for removal of cadmium from a calcined material further includes a carbon monoxide oxidation device configured to receive the cadmium containing gas output from the cadmium removal vessel prior to the cadmium containing gas being passed through the heat exchanger. The carbon monoxide oxidation device is configured to heat the cadmium containing gas and is also configured to provide oxidation of the cadmium vapor to increase the boiling point of the cadmium. The increasing of the boiling point of the cadmium vapor can facilitate a quicker condensation of the cadmium vapor when it is passed through the heat exchanger.

The apparatus for removal of cadmium from a calcined material further includes a cadmium filtration system configured to separate the solid particulates output from the heat exchanger.

The cadmium filtration system can be comprised of at least one bag filter in some embodiments. In other embodiments, the cadmium filtration system can be configured as another type of mechanism configured to remove solids from a gas flow.

The apparatus for removal of cadmium from a calcined material can also include a seed source that can include solid seed particulates. The seed source can be configured to feed the solid seed particulates of the seed source to the cadmium containing gas prior to the cadmium containing gas being fed to the heat exchanger, when the cadmium containing gas is fed to the heat exchanger and/or within the heat exchanger to facilitate formation of the solid particulates comprising the cadmium. The seed particulates can be configured to help facilitate formation of the solid particulates within a pre-selected size range that may be suitable for filtration via one or more bag filters or other solid/gas filtration mechanism.

The apparatus for removal of cadmium from a calcined material can also contain other elements. For instance, the apparatus can include the calciner. The calciner can be configured as a kiln, rotary kiln, an in-line calciner, a fluidized bed reactor, a rotary calciner, a counter current calciner or other type of calciner. The apparatus may also include pumps, fans, and/or compressors, fuel sources and conduits (e.g. ducts, valves, lines, etc.) for facilitating the transport of material between different elements of the apparatus. The apparatus can also include a controller that may be connected to valves and a plurality of different sensors (e.g. measurement devices, temperature sensors, pressure sensors, flow rate sensors, etc.) connected to elements of the apparatus to monitor operation of the apparatus and/or elements of the apparatus and to control those operations in accordance with a control program stored in its non-transitory memory that the processor of the controller may run. The apparatus may also include other elements such as scrubbers, wash towers, one or more stacks, or other elements.

Embodiments of the apparatus can include a number of different elements or configurations. In some embodiments, the apparatus can be configured as a plant. The apparatus can include a calciner configured to calcine a feed material and a cadmium removal vessel configured to receive calcined material from the calciner to remove cadmium from the calcined material in a reducing environment. The cadmium removal vessel can be configured such that the reducing environment has substantially no oxygen gas therein, has a carbon monoxide concentration of gas within the environment that is between 0.1% by volume and 5.0% by volume, and has a temperature of between 1,000°C and 1,200°C.

In some embodiments, the reducing environment may be configured so that there is no oxygen gas within the environment of the cadmium removal vessel during removal of the cadmium from the calcined material via an entirety of oxygen gas being used to combust fuel fed to the cadmium removal vessel to heat the calcined material to remove the cadmium from the calcined material in the reducing environment. In other embodiments, there may be substantially no oxygen gas within the reducing environment of the cadmium removal vessel during removal of the cadmium from the calcined material by there being trace amounts of oxygen gas (e.g. less than 0.1% by volume oxygen gas, less than 0.5% by volume oxygen gas, etc.).

The filtration system is configured to filter the solid particulates from a fluid entraining the solid. The fluid may be the gas that has had the cadmium removed via condensation that occurred in the heat exchanger. The filtration system can be configured as a bag filter or other type of filtration mechanism that is configured to separate solids from a gas flow entraining those solids. The apparatus can also include other elements. For instance, the apparatus can include one or more conduits for transporting material to and from different elements. As another example, the apparatus can include at least one valve and/or at least one pump, fan or compressor for affecting an operational parameter of any element of the plant or a flow rate of material to or from an element. As yet another example, the apparatus can include one more separators (e.g. a cyclone, a circuit of cyclones that operate in series, a circuit of cyclones that operate in parallel, etc.), additional heat exchangers, at least one scrubber, at least one wash tower, at least one stack, at least one crushing circuit for crushing material to be calcined (e.g. one or more mills, crushers, pulverizers, or other type of comminution device) and/or other elements.

Other details, objects, and advantages of the apparatus for removing cadmium and methods of making and using the same will become apparent as the following description of certain exemplary embodiments thereof proceeds.

### BRIEF DESCRIPTION OF THE DRAWINGS

Exemplary embodiments of the apparatus for removing cadmium and methods of making the same are shown in the accompanying drawings. It should be understood that like reference numbers used in the drawings may identify like components.
Figure 1 is a schematic block diagram of an exemplary embodiment of an apparatus configured for processing a phosphate containing material and removing cadmium from that material. The exemplary embodiment shown in Figure 1 includes an exemplary embodiment of the apparatus for removing cadmium.
Figure 2 is block diagram of an exemplary controller that can be utilized in the exemplary apparatus shown in Figure 1.

### DETAILED DESCRIPTION OF EXEMPLARY EMBODIMENTS

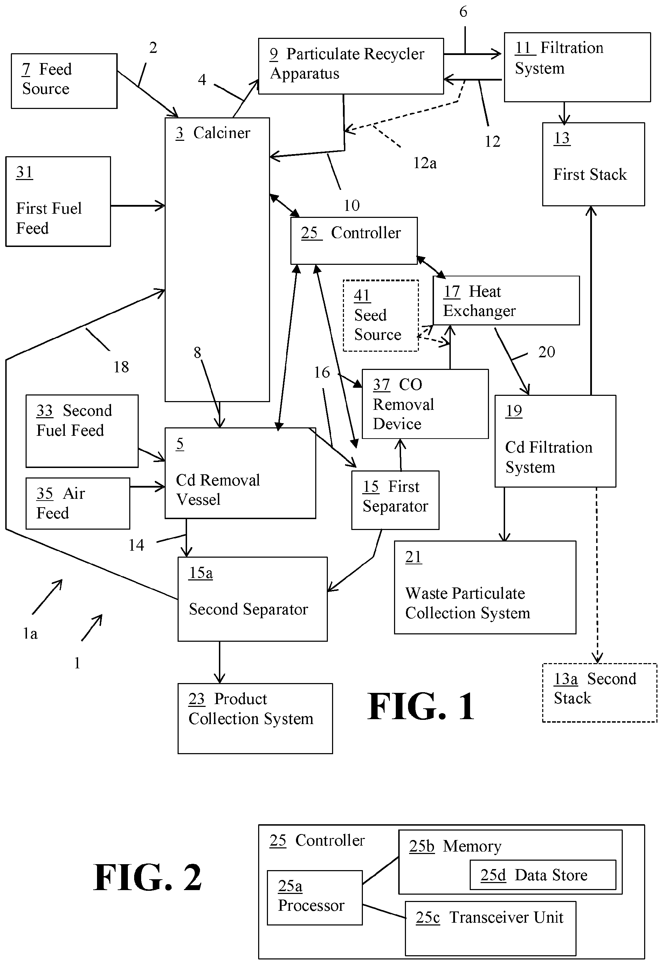

An apparatus for processing a phosphate containing material and removing cadmium from that material 1, which includes an exemplary embodiment of an apparatus for removing cadmium 1a, can be appreciated from Figures 1-2. In some embodiments, the apparatus for processing a phosphate containing material and removing cadmium from that material may be configured as a plant. Ore or other material containing phosphate can be transported from a feed source 7 to a calciner 3 for calcination of that material. The calciner 3 can be configured as a kiln, an in-line calciner, a fluidized bed reactor, a rotary calciner, a counter current calciner or other type of calciner 3.

The material from the feed source 7 can be comminuted form a source ore material and/or otherwise processed prior to being fed to the calciner. For instance, one or more comminution devices may be utilized to process a source material to sufficiently grind, or comminute that material to a pre-selected size range prior to feeding the material to the calciner 3. In addition to comminution (e.g. grinding, pulverizing, crushing etc.), the feed material containing phosphate may have previously undergone other processing, such as, for example, froth flotation via one or more flotation machines in some embodiments.

In some embodiments, the material fed to the calciner 3 from the feed source 7 may be solid particulate material that is entrained within a flow of gas for providing the feed flow 2 of phosphate containing material to the calciner 3 or may be solid particulate material that is moved into the calciner 3 via one or more conduits. The feed flow 2 may be fed from an ore feed source 7 to the calciner 3 via one or more conduits (e.g. ducts, pipes, etc.) that are between the source of the feed material and the calciner 3 for the transport of the feed flow 2. The feed material can also contain an undesired component such as cadmium (Cd).

The calciner 3 can be fed fuel from a first fuel feed 31. The first fuel feed may be a fossil fuel such as natural gas, may be pulverized coal entrained in air, or may be another type of suitable fuel. The calciner 3 can be configured to combust the fuel fed therein to heat the calciner to a pre-selected temperature (e.g. 900°C, 1,000°C, 1,100°C, etc.) or a pre-selected temperature range, such as, for example, 700°C-1,100°C, 900°C -1,000°C, or 950°C - 1,100°C. The calciner 3 can also operate at a pre-selected pressure or pressure range (e.g. 1 atmosphere, 1.1 atmospheres, 101.325-112 kPa, etc.). One or more burners may be provided in the calciner 3 to facilitate burning of the fuel therein. The calciner 3 can be operated to have a content of oxygen therein to help facilitate complete combustion of the fuel and provide an oxidizing environment within the calciner 3 to facilitate oxidation of the phosphate containing material. This oxidizing environment can also help ensure that cadmium within the phosphate containing material is retained by that solid material to avoid having the cadmium being within the exhaust flow 4 output from the calciner 3. It is contemplated that the oxidizing environment within the calciner 3 can help ensure that most (e.g. over 90%, over 95%, over 99%, over 99.9%, etc.), if not all, of the cadmium within the feed material fed to the calciner 3 can be retained within the calcined solid material so that the cadmium is prevented from leaving the calciner 3 in the exhaust flow 4 output from the calciner 3.

The heat generated from the combustion of the first fuel feed 31 via the calciner 3 can be used to heat the phosphate containing material fed to the calciner 3 for calcining that material for a pre-selected residence time (e.g. 1-10 seconds, 2-7 seconds, 2-3 seconds, 1-5 minutes, 10 minutes, 3-15 minutes, 10-45 minutes, 5-60 minutes, etc.) prior to outputting the calcined material in an output flow 8 to a Cd removal vessel 5. The output flow 8 may be transported to the Cd removal vessel 5 via one or more conduits that extend between the calciner 3 and the cadmium removal vessel 5. The output flow 8 may contain output calcined material that contains most, if not all of the cadmium that was within the feed material fed to the calciner 3.

The exhaust flow 4 that can be output from the calciner 3 during operation of the calciner 3 may include solid particulate material entrained within a gas produced from combustion of the fuel that heated the phosphate containing material for calcining of that material. Some of that solid material may include phosphate. The exhaust flow 4 from the calciner 3 may be fed to a particulate recycler apparatus 9 via one or more conduits that extend from the calciner 3 to the particulate recycler apparatus 9 for transport of the exhaust flow. The particulate recycler apparatus 9 can be configured to process the exhaust flow 4 to remove solid particulates that may contain phosphate and recycle that phosphate containing material back to the calciner 3 in a recycle flow 10 via one or more conduits that extend from the particulate recycler apparatus 9 to the calciner 3 for transport of the recycle flow 10. The particulate recycler apparatus 9 can include one or more cyclones or other type of particulate separate mechanism for the removal of phosphate containing solids out of the exhaust flow for recycling that material back to the calciner 3. The treated exhaust may then be output from the particulate recycler apparatus 9 to a filtration system 11 via one or more conduits. The filtration system 11 can be configured to remove pollutants from the treated exhaust flow 6. The filtration system 11 can include one or more particulate filtration mechanisms. For instance, the filtration system 11 can include a catalytic filtration mechanism that is configured to reduce nitrous oxide components (NOₓ components), carbon monoxide (CO), and volatile organic compounds (VOC components) from the exhaust flow. The filtration system 11 can also include other type of pollutant removal devices, such as one or more scrubbers that can be configured to extract undesirable components from the exhaust flow to remove undesirable pollutants from that flow prior to the flow being output to the atmosphere via at least one first stack 13. The filtration system 11 can be configured to help ensure that the exhaust output from the filtration system 11 to the external environment via the first stack 13 has concentrations of pollutants that at least comply with applicable pollution regulations.

The filtration system 11 can include at least one type of particulate filter mechanism that captures solid particulate material that may include phosphate material. That solid material may be recycled back to the particulate recycler apparatus 9 in a particulate recapture flow 12 for further processing by the particulate recycler apparatus 9 for being ultimately recycled back to the calciner 3 via the recycle flow 10 or may be fed to the recycle flow 10 via a supplementary recycle flow 12a (shown in broken line in Figure 1). It should be appreciated that the supplementary recycle flow 12a may include one or more conduits that extend from the filtration system 11 to the one or more conduits of the recycle flow 10. This flow may be a split from the particulate recapture flow 12 fed back to the particulate recycler apparatus 9 or may be an alternative to this flow such that an entirety of the flow of phosphate containing particulates obtained by operation of the filtration system 11 is recycled back to the calciner 3 via recycle flow 10.

The calciner output flow 8 can feed the calcined phosphate containing material having cadmium to the Cd removal vessel 5 for processing of that material so that undesired cadmium within the solid calcined phosphate containing material can be removed from the phosphate containing solid materials fed to the Cd removal vessel 5. The output flow 8 may be at a temperature at which the calciner is operated (e.g. e.g. 900°C, 1,000°C, or 1,100°C) or within the temperature range at which the calciner 3 is operated (e.g. 700°C-1,100°C, 900°C -1,000°C, or 950°C -1,100°C, etc.).

The Cd removal vessel 5 can be configured as a reactor or other type of vessel that can be configured to provide a reducing environment for removal of cadmium from the calcined material fed therein. The material within the Cd removal vessel 5 may be further heated to a pre-selected temperature or temperature range of 1,000°C to 1,200°C (e.g. 1,100°C, 1,050°C, 1,150°C, etc.) or to a temperature that is above 1,200°C. The pressure of the Cd removal vessel 5 can be the same pressure as the pressure of the calciner 3 or may be a different pressure (e.g. the Cd removal vessel 5 can operate at the same pressure as the calciner 3 or may be configured to operate at a different pressure).

The temperature increase of the calcined material fed to the Cd removal vessel 5 may be provided by fuel from a second fuel feed 33 being fed into the Cd removal vessel 5 along with an amount of air from an air feed 35 fed to the Cd removal vessel via at least one conduit coupled to one or more compressors, pumps, or fans configured to feed air to the Cd removal vessel 5. The fuel of the second fuel feed 33 can be natural gas, pulverized coal, or other type of combustible fuel. The fuel of the second fuel feed can be fed into the Cd removal vessel so that there is an excess amount of fuel fed into the Cd removal vessel 5 for combustion of the fuel so that any oxygen gas (O₂) within the air fed to the Cd removal vessel for combustion of the fuel within the Cd vessel is fully removed via combustion of the fuel (e.g. there is no excess oxygen gas present in the environment of the Cd removal vessel for facilitating removal of the cadmium from the calcined material). The removal of all the oxygen gas, or at least substantially all of the oxygen gas (e.g. removal of 99.9% of the oxygen gas, removal of 99% of the oxygen gas, etc.) can help ensure that the environment within the Cd removal vessel 5 is a reducing environment for cadmium to facilitate the cadmium leaving the solid phase and becoming gaseous to exit the calcined phosphate containing solid material so that the cadmium can be separated from the solid calcined material.

In addition to controlling the operation of the Cd removal vessel 5 so that no oxygen gas (O₂) is present or substantially no oxygen gas is present (e.g. there is less than 0.1% by volume oxygen gas, there is less than 1% by volume oxygen gas, there is less than 2% by volume oxygen gas, etc.) to facilitate removal of cadmium from the calcined phosphate material, other parameters may be controlled to help ensure the environment within the Cd removal vessel 5 facilitates separation and removal of the cadmium. For instance, the temperature, pressure, fuel feed rate, residence time, and air feed rate can be adjusted to control the carbon monoxide content within the Cd removal vessel so that content of carbon monoxide within the gas in the Cd removal vessel 5 is between 0.1% to 5.0% by volume carbon monoxide or so that the content of carbon monoxide within the Cd removal vessel is controlled to be within the range of 0.1% to 5.0% by volume carbon monoxide. In some embodiments a particular set point within this range may be set, such as 0.5% by volume carbon monoxide, 2.5% by volume carbon monoxide, or 4% by volume carbon monoxide. In other embodiments, the set point for control of the concentration of carbon monoxide may be within a pre-selected range (e.g. 0.3%-0.8% by volume, 1.2%-3.7%, by volume, greater than 0% by volume and no more than 5.0% by volume, etc.). It is contemplated that in some embodiments other carbon monoxide pre-set concentration ranges may be utilized (e.g. a molar concentration range, a weight concentration set point or range, etc.).

The residence time for the phosphate material fed into the cadmium removal vessel for facilitating removal of cadmium may also be controlled to obtain a desired amount of cadmium removal or to help ensure at least a pre-selected amount of cadmium removal occurs. In some embodiments, the residence time may be set to be within the range of five minutes to an hour or ten minutes and forty-five minutes (e.g. 15 minutes, 25 minutes, 35 minutes, 45 minutes, etc.). Depending on the composition of the source material and/or the calcined phosphate material fed to the Cd removal vessel, the residence time and/or temperature at which the Cd removal vessel 5 operates may be adjusted as needed to meet a pre-selected cadmium removal operational goal and operational cost objective.

The cadmium containing gas that has the removed cadmium as well as combustion products such as carbon dioxide and carbon monoxide can be output from the Cd removal vessel as a cadmium output flow 16 that is transported away from the Cd removal vessel 5 via at least one conduit to be fed to a first separator 15. The first separator 15 can include at least one cyclone or other type of particulate separator that is configured to separate phosphate containing particulates that have had the cadmium removed therefrom that may be entrained within the gaseous component of the cadmium output flow 16 so that these separated phosphate containing particulates can be sent to a second separator 15a.

The calcined phosphate material that has had its cadmium content removed or substantially reduced via processing from the Cd removal vessel can be output from the Cd removal vessel 5 as a product output flow 14 that is fed to the second separator 15a. The second separator 15a may therefore receive calcined phosphate containing material that has had cadmium removed therefrom from the first separator 15 and the Cd removal vessel 5.

The second separator 15a can include one or more cyclones and/or other type of solid/fluid separator mechanism. For example, the second separator 15a can be configured to separate the calcined phosphate containing particulates that have had their cadmium concentration reduced, if not eliminated, from gas in which this solid material may be entrained. The solid phosphate containing material fed to the second separator via output flow 14 and via the solid particulate flow from the first separator 15 may be output from the second separator 15a to a product collection system 23. The gas separated from that solid calcined phosphate material may be recycled back to the calciner as a gas recycle flow 18 via one or more conduits connected between the second separator 15a and the calciner 3.

The product collection system 23 can include a number of product processing mechanisms for obtaining or further extracting phosphate from the calcined phosphate containing solid material fed therein. For instance, the product collection system 23 can include a number of cyclones, may include a plurality of comminution devices, may include one or more flotation machines, and/or may also include one or more coolers, such as one or more fluid bed coolers that may be configured for cooling the hot phosphate solids to a pre-selected temperature or pre-selected temperature range for subsequent processing, storage, and/or other handling.

In addition to the output of solids that may be entrained within the cadmium containing gaseous output flow 16, the first separator 15 can output the gas after removing a large portion of the solids entrained therein from the gas. The output cadmium containing gas can be fed through a CO removal device 37, which can be configured to remove carbon monoxide from that gas. In some embodiments, the CO removal device 37 may be a carbon monoxide burn off fan, carbon monoxide burn off oven, carbon monoxide oxidation unit, or other type of carbon monoxide removal device. The CO removal device 37 can be configured to receive the cadmium containing gas output from the Cd removal vessel 5 prior to the cadmium containing gas being passed through a heat exchanger 17. In some embodiments, the CO removal device can be configured to heat the cadmium containing gas or otherwise process that gas to cause oxidation of the cadmium vapor therein to increase the boiling point of the cadmium vapor. In some embodiments, air may be fed to the CO removal device 37 to facilitate heating of the cadmium containing gas and oxidation of the cadmium vapor within that gas. The increasing of the boiling point of the cadmium vapor within the cadmium containing gas provided by the oxidation of the cadmium vapor can facilitate a rapid condensation of the cadmium when the cadmium is subsequently cooled when passed through the heat exchanger 17.

The cadmium containing gas may then be fed to the heat exchanger 17 so that heat from the hot cadmium containing gas can be transported from the cadmium containing gas to another material flow in the apparatus. In some embodiments, the heat exchanger 17 can be a counter current heat exchanger that is configured to pre-heat the phosphate containing material fed to the calciner 3, preheat air fed to the calciner 3 or the Cd removal vessel 5, preheat fuel fed to the calciner 3 and/or fed to the Cd removal vessel 5, or heat one or more other material flows used in the processing apparatus. The cadmium within the cadmium containing gas fed to the heat exchanger 17 can be condensed while undergoing cooling within the heat exchanger 17.

It is contemplated that the cadmium containing gas may still have solid particulates entrained therein even after having passed through the first separator 15. These solid particulates may provide seeding so that the condensed cadmium is adsorbed and/or absorbed by the solid particulates to facilitate formation of solid particulates containing the condensed cadmium in a size sufficient for filtration out of the gas flow via bag filters or other gas based filtration mechanisms. It is also contemplated that there may not be sufficient particulate within the cadmium containing gas after that gas is passed through the first separator 15. In such situations, particulate materials from a seed source 41 can be fed to the cadmium containing gas flow via one or more conduits and/or can be fed into the heat exchanger 17 as shown in broken line in Figure 1. The solid particulates from the seed source 41 may be fed to the cadmium containing gas prior to that gas being fed to the heat exchanger, at the same time the gas is fed to the heat exchanger, or at a point within the heat exchanger 17 downstream of the cadmium containing gas inlet into the heat exchanger 17. The solid particulates that are used may be composed of any type of material suitable for absorbing and/or adsorbing the condensing cadmium in the heat exchanger so that the condensed cadmium can be solidified within the particulates to form a sufficiently large particulate that has a large enough size to facilitate being filtered out of the cooled cadmium particulate containing gas flow 20 that exits the heat exchanger 17. Examples of materials that may be used as solid particulates for the seed source 41 can include silica sand, carbon ash, or other material that may provide a solid body that may absorb and/or adsorb cadmium to facilitate formation of a sufficiently large sized solid particulate to facilitate filtering from a gas flow via a bag filter or other filtration mechanism configured to separate solids from the gas in which the solids are entrained. In some embodiments, the particulates used as the seed material for the seed source 41 can be a type of solid material that is inert to the other components of the cadmium containing gas as the gas experiences cooling via the heat exchanger 17 and/or other processing so that the material only absorbs or adsorbs the cadmium. The size range for the material used as the seed source can be 1 millimeter (mm) or less than 1 mm or may be another type of pre-selected size range that permits the particulate material to be transported and/or entrained within a gas flow. An exemplary size range for the cadmium containing particulates that may be formed via the cooling of the cadmium containing gas in the presence of solid particulates can be 1-10 micrometers (also known as microns), greater than 1 micrometer, greater than 5 micrometers, greater than 10 micrometers, greater than 10 micrometers and less than 1 mm, greater than 0.3 mm, greater than 0.5 mm, or another type of size range.

The cooled cadmium particulate containing gas flow 20 output from the heat exchanger 17 can be fed to a Cd filtration system 19 that is configured to filter the cadmium containing solid particulates from the gas in which those particulates are entrained. The gas that entrains these particulates can include the gas that had the cadmium condensed therefrom. The Cd filtration system 19 can include one or more bag filters, one or more bag filter devices, or at least one other type of solid particulate separator mechanism configured to separate the solid cadmium containing particulates from the fluid in which they are entrained. The solid cadmium containing particulates can be output from the Cd filtration system 19 to a waste particulate collection system 21 via one or more conduits so that the cadmium containing material can be safely processed and disposed of (e.g. refined into more pure cadmium for sale of the cadmium, stored for safe disposal of the cadmium, etc.). The gas separated from the cadmium containing solid particulates may be output from the Cd filtration system 19 via one or more conduits to be emitted to the environment via the first stack 13 or via at least one second stack 13a shown in broken line in Figure 1.

A controller 25 can be provided to communicate with one or more sensors, detectors, valves, or other types of process control mechanisms to facilitate overseeing of operation of the apparatus for phosphate containing material and removing cadmium from that material 1 and/or the apparatus for removing cadmium 1a. For instance, a controller 25 can be communicatively connected to one or more sensors connected to the calciner 3, conduits connected to the calciner 3, Cd removal vessel 5, conduits connected to the Cd removal vessel 5, first separator 15, conduits connected to the first separator 15, heat exchanger 17, conduits connected to the heat exchanger 17, and/or other elements of the apparatus. The sensors can be measurement devices, detectors, or other type of input/output mechanism that collects data to monitor one or more operating conditions (e.g. temperature sensors, concentration sensors, flow sensors, flow rate sensors, pressure sensors, etc.). For instance, the controller 25 can be configured to monitor operations of the Cd removal vessel 5 to help ensure that the Cd removal vessel 5 operates so that the conditions within the Cd removal vessel are maintained so that there is substantially no oxygen gas (O₂) therein, that the CO concentration is between 0.1 volume percent and 5.0 volume percent therein, that the temperature is above 1,000°C or is within the 1,000°C to 1,200°C range, and that the residence time of particulates fed to the Cd removal vessel 5 to have cadmium contained therein removed from those particulates is within a pre-selected range (e.g. within 10-60 minutes, within 20-25 minutes, etc.).

The controller 25 can be a computer device that has hardware that may include a processor 25a (e.g. a microchip, core processor, central processing unit, etc.) that is connected to non-transitory memory 25b (e.g. flash memory, a hard drive, etc.) and a transceiver unit 25c, which may include at least one receiver and at least one transmitter. The transceiver unit 25c can be configured so that the controller can transmit data to the sensors and other devices to which it is communicatively connected and receive data from those devices. The communication path may include one or more networks (e.g. wired transmission paths provided by cables or wiring and/or wireless transmission paths provided by radio links and/or intermediate nodes such as access points, base stations, gateways, or other network nodes). The memory 25b can have at least one data store 25d stored therein. The data store 25d can be an application, such as a program, that may define a method that is to be performed by the controller when the application is executed by the processor 25a. The method that is defined may be an automated process control method for operations of the apparatus for phosphate containing material and removing cadmium from that material 1 and/or the apparatus for removing cadmium 1a such that the controller 25 communicates with valves, and other mechanisms to adjust operations of the elements of the apparatus as needed to operate within pre-selected operational parameters to effect calcination of the phosphate containing feed material and/or removal of cadmium from calcined material via the Cd removal vessel 5.

The controller 25 can also be configured to communicate with other network elements. For instance, the controller 25 can be configured to communicate with a workstation of an operator that is configured to provide data to the operator via one or more output devices connected to the workstation (e.g. a display device, a printer, a speaker, etc.). The controller 25 can also be connected to other network elements for communication of data relating to calcination operations, cadmium removal operations, or other operations being monitored and/or overseen by the controller 25. The controller 25 can also be configured to receive input from an operator via a workstation or via an input device connected to the controller 25. The input so received can be utilized to adjust set points or other parameters the controller 25 may utilize to help monitor and/or control operations of the calciner 3, Cd removal vessel 5, or other elements of the apparatus for removing cadmium 1a or the apparatus for processing a phosphate containing material and removing cadmium from that material 1.

Embodiments of the apparatus for removing cadmium can be configured to permit cadmium removal to occur at a reduced cost as compared to conventional systems. For example, the gas based output of the Cd removal vessel 5 can permit the use of the heat from the Cd removal process to be recycled via the heat exchanger 17 to permit a more efficient use of that heat as compared to conventional systems, in which the heat from such processing may be substantially all lost. Further, the apparatus can be configured so that the heat from the calcination of the fed material can be more efficiently used as the heat from calcination can provide a substantial part of the heat used to reduce the cadmium from the calcined material in the Cd removal vessel. It is contemplated that such features may permit operations of embodiments of the apparatus for cadmium removal to provide substantive cost savings to operators. For instance, it is contemplated that the operational cost savings can be up to millions of dollars for some type of conventional plant designs. Of course, the actual cost savings that may be provided can vary depending on the design of the plant and other factors (e.g. operational capacity, energy efficiency of plant elements, etc.).

It should be appreciated that embodiments of the apparatus for phosphate containing material and removing cadmium from that material 1 and/or the apparatus for removing cadmium 1a can include other elements to meet different sets of design criteria. For instance, the conduits that may be attached between different units can include multiple different types of pipes or ducts, valves, and other conduit elements. Pumps, fans, or compressors may be in communication with those conduits or with different elements to help control the pressure, flow rate of material, and/or other operational condition of one or more elements. As yet another example, the type of pollution control mechanisms, filtration mechanisms, or particulate separation devices used can be any of a number of different options that may meet a particular set of design criteria. As yet another example, the Cd filtration system 19 may include one or more pollution removal mechanisms (e.g. a scrubber, a wash tower, etc.) for removing VOCs, sulfur oxides, nitrous oxides, or other materials from the gas after the cadmium containing particles are separated therefrom and before the gas is emitted out of the first stack 13 and/or second stack 13a. As yet another example, the particulate recycler apparatus 9 can include one or more filter devices and/or particulate separation mechanisms that may function in parallel or in series. As yet another example, the first and second separators 15 and 15a may each include one or more separation mechanisms that may operate in parallel or in series. As yet another example, the pressure and/or temperature at which different units may operate can be set to meet a particular set of design criteria.

Further, it should be understood that the apparatus for removing cadmium 1a disclosed herein can be utilized for removing cadmium from calcined materials that may contain other materials instead of or in addition to phosphate. For instance, it is contemplated that embodiments of the cadmium removal apparatus 1a may be utilizable to remove cadmium from other types of calcined material output from a calciner 3, such as, for example, limestone, zinc, gold or silver.

## Claims

1. An apparatus for removing cadmium from a calcined material comprising:
a cadmium removal vessel (5) configured to receive calcined material from a calciner (3) to remove cadmium from the received calcined material, the cadmium removal vessel (5) configured to be controlled so that reducing of the cadmium from the calcined material occurs in a reducing environment that has substantially no oxygen gas;
a heat exchanger (17) configured to receive cadmium containing gas output from the cadmium removal vessel (5) to transfer heat from the cadmium containing gas to cool the cadmium containing gas such that cadmium within the cadmium containing gas condenses, wherein the heat exchanger (17) is configured such that the cadmium condensed therein is absorbed and/or adsorbed with particulates entrained within the cadmium containing gas to form solid particulates comprised of the condensed cadmium;
a carbon monoxide oxidation device configured to receive the cadmium containing gas output from the cadmium removal vessel (5) prior to the cadmium containing gas being passed through the heat exchanger (17), the carbon monoxide oxidation device configured to heat the cadmium containing gas and configured to oxidize the cadmium of the cadmium containing gas; and
a cadmium filtration system (19) configured to separate the solid particulates output from the heat exchanger.

2. The apparatus of claim 1, wherein the cadmium removal vessel (5) is configured to control carbon monoxide therein during removal of cadmium from the calcined material such that there is between 0.1% and 5.0% by volume carbon monoxide within gas retained in the cadmium removal vessel (5) and/or within the reducing environment during removal of cadmium from the calcined material.

3. The apparatus of claim 1, wherein the cadmium removal vessel (5) is configured to control carbon monoxide therein during removal of cadmium from the calcined material such that there is more than 0% by volume carbon monoxide and that there is no more than 5.0% by volume carbon monoxide within the cadmium removal vessel (5) during removal of cadmium from the calcined material.

4. The apparatus of claim 1, wherein the cadmium filtration system (19) is comprised of at least one bag filter.

5. The apparatus of claim 1, comprising the calciner (3).

6. The apparatus of claim 1, wherein the calcined material comprises phosphate.

7. The apparatus of claim 1, further comprising the calciner (3), and
wherein the cadmium removal vessel (5) is configured such that the reducing environment has a carbon monoxide concentration of gas within the environment that is greater than 0% by volume and is no more than 5.0% by volume, and has a temperature of between 1,000°C and 1,200°C, and
wherein the carbon monoxide oxidation device is configured to oxidize cadmium vapor within the cadmium containing gas to increase the boiling point of the cadmium vapor.

## Patentansprüche

1. Einrichtung zum Entfernen von Cadmium aus einem kalzinierten Material, umfassend:
ein Cadmiumentfernungsgefäß (5), konfiguriert, um kalziniertes Material aus einem Kalzinator (3) aufzunehmen, um Cadmium aus dem aufgenommenen kalzinierten Material zu entfernen, wobei das Cadmiumentfernungsgefäß (5) konfiguriert ist, um so kontrolliert zu werden, dass Reduzieren des Cadmiums aus dem kalzinierten Material in einer reduzierenden Umgebung erfolgt, die im Wesentlichen kein Sauerstoffgas aufweist;
einen Wärmetauscher (17), konfiguriert, um cadmiumhaltige Gasausgabe aus dem Cadmiumentfernungsgefäß (5) aufzunehmen, um Wärme aus dem cadmiumhaltigen Gas zu übertragen, um das cadmiumhaltige Gas derart zu kühlen, dass Cadmium in dem cadmiumhaltigen Gas kondensiert, wobei der Wärmetauscher (17) derart konfiguriert ist, dass das darin kondensierte Cadmium an Partikeln absorbiert und/oder adsorbiert wird, die in dem cadmiumhaltigen Gas mitgerissen werden, um feste Partikel zu bilden, die aus dem kondensierten Cadmium bestehen;
eine Kohlenmonoxidoxidationsvorrichtung, konfiguriert, um die cadmiumhaltige Gasausgabe aus dem Cadmiumentfernungsgefäß (5) aufzunehmen, bevor das cadmiumhaltige Gas durch den Wärmetauscher (17) hindurchgeleitet wird, wobei die Kohlenmonoxidoxidationsvorrichtung konfiguriert ist, um das cadmiumhaltige Gas zu erwärmen und konfiguriert ist, um das Cadmium des cadmiumhaltigen Gases zu oxidieren; und
ein Cadmiumfiltrationssystem (19), konfiguriert, um die feste Partikelausgabe aus dem Wärmetauscher (17) abzutrennen.

2. Einrichtung nach Anspruch 1, wobei das Cadmiumentfernungsgefäß (5) konfiguriert ist, um während der Entfernung von Cadmium aus dem kalzinierten Material das Kohlenmonoxid darin derart zu kontrollieren, dass dort während der Entfernung von Cadmium aus dem kalzinierten Material zwischen 0,1 Volumen-% und 5,0 Volumen-% Kohlenmonoxid in dem Gas, das von dem Cadmiumentfernungsgefäß (5) einbehalten wird, und/oder in der reduzierenden Umgebung vorliegt.

3. Einrichtung nach Anspruch 1, wobei das Cadmiumentfernungsgefäß (5) konfiguriert ist, um während der Entfernung von Cadmium aus dem kalzinierten Material Kohlenmonoxid darin derart zu kontrollieren, dass dort während der Entfernung von Cadmium aus dem kalzinierten Material mehr als 0 Volumen-% Kohlenmonoxid vorliegt und dass dort nicht mehr als 5,0 Volumen-% Kohlenmonoxid in dem Cadmiumentfernungsgefäß (5) vorliegt.

4. Einrichtung nach Anspruch 1, wobei das Cadmiumfiltrationssystem (19) aus mindestens einem Beutelfilter besteht.

5. Einrichtung nach Anspruch 1, umfassend den Kalzinator (3).

6. Einrichtung nach Anspruch 1, wobei das kalzinierte Material Phosphat umfasst.

7. Einrichtung nach Anspruch 1, weiter umfassend den Kalzinator (3), und
wobei das Cadmiumentfernungsgefäß (5) derart konfiguriert ist, dass die reduzierende Umgebung eine Kohlenmonoxidkonzentration von Gas in der Umgebung aufweist, die größer als 0 Volumen-% ist und nicht mehr als 5,0 Volumen-% beträgt, und eine Temperatur zwischen 1.000 °C und 1.200 °C aufweist, und
wobei die Kohlenmonoxidoxidationsvorrichtung konfiguriert ist, um Cadmiumdampf in dem cadmiumhaltigen Gas zu oxidieren, um den Siedepunkt des Cadmiumdampfes zu erhöhen.

## Revendications

1. Appareil d'élimination de cadmium d'un matériau calciné comprenant :
une cuve d'élimination de cadmium (5) configurée pour recevoir un matériau calciné depuis un four de calcination (3) pour éliminer du cadmium du matériau calciné reçu, la cuve d'élimination de cadmium (5) étant configurée pour être commandée de sorte qu'une réduction du cadmium du matériau calciné survienne dans un environnement de réduction qui n'a sensiblement pas de gaz oxygène ;
un échangeur de chaleur (17) configuré pour recevoir un gaz contenant du cadmium délivré depuis la cuve d'élimination de cadmium (5) pour transférer une chaleur du gaz contenant du cadmium pour refroidir le gaz contenant du cadmium de sorte que le cadmium à l'intérieur du gaz contenant du cadmium se condense, dans lequel l'échangeur de chaleur (17) est configuré de sorte que le cadmium condensé à l'intérieur de celui-ci soit absorbé et/ou adsorbé avec des particules entraînées à l'intérieur du gaz contenant du cadmium pour former des particules solides constituées du cadmium condensé ;
un dispositif d'oxydation de monoxyde de carbone configuré pour recevoir le gaz contenant du cadmium délivré depuis la cuve d'élimination de cadmium (5) avant que le gaz contenant du cadmium ne soit passé à travers l'échangeur de chaleur (17), le dispositif d'oxydation de monoxyde de carbone étant configuré pour chauffer le gaz contenant du cadmium et configuré pour oxyder le cadmium du gaz contenant du cadmium ; et
un système de filtration de cadmium (19) configuré pour séparer les particules solides délivrées de l'échangeur de chaleur.

2. Appareil selon la revendication 1, dans lequel la cuve d'élimination de cadmium (5) est configurée pour commander du monoxyde de carbone à l'intérieur de celle-ci pendant l'élimination de cadmium du matériau calciné de sorte qu'il y ait entre 0,1 % et 5,0 % en volume de monoxyde de carbone à l'intérieur d'un gaz retenu dans la cuve d'élimination de cadmium (5) et/ou à l'intérieur de l'environnement de réduction pendant l'élimination de cadmium du matériau calciné.

3. Appareil selon la revendication 1, dans lequel la cuve d'élimination de cadmium (5) est configurée pour commander du monoxyde de carbone à l'intérieur de celle-ci pendant l'élimination de cadmium du matériau calciné de sorte qu'il y ait plus de 0 % en volume de monoxyde de carbone et qu'il n'y ait pas plus de 5,0 % en volume de monoxyde de carbone à l'intérieur de la cuve d'élimination de cadmium (5) pendant l'élimination de cadmium du matériau calciné.

4. Appareil selon la revendication 1, dans lequel le système de filtration de cadmium (19) est constitué d'un filtre à poches.

5. Appareil selon la revendication 1, comprenant le four de calcination (3).

6. Appareil selon la revendication 1, dans lequel le matériau calciné comprend du phosphate.

7. Appareil selon la revendication 1, comprenant en outre le four de calcination (3), et
dans lequel la cuve d'élimination de cadmium (5) est configurée de sorte que l'environnement de réduction présente une concentration en monoxyde de carbone de gaz à l'intérieur de l'environnement qui est supérieure à 0 % en volume et qui n'est pas supérieure à 5,0 % en volume, et présente une température entre 1000°C et 1200°C, et
dans lequel le dispositif d'oxydation de monoxyde de carbone est configuré pour oxyder une vapeur de cadmium à l'intérieur du gaz contenant du cadmium pour augmenter le point d'ébullition de la vapeur de cadmium.
